# FASCICULE DE BREVET EUROPEEN

(11) **EP 4 214 001 B1**
(45) Date de publication et mention de la délivrance du brevet: **06.11.2024**
(21) Numéro de dépôt: 21782508.2
(22) Date de dépôt: 21.09.2021
(51) Int. Cl.: B07B 1/24

(54) **APPAREIL A TAMBOUR DE SEPARATION D'EMBALLAGES ET MATIERE Y ADHERANT, A IMPACT ECOLOGIQUE AMELIORE**
VORRICHTUNG MIT TROMMEL ZUM TRENNEN VON VERPACKUNGEN UND DARAN HAFTENDEM MATERIAL MIT VERBESSERTER UMWELTBELASTUNG
APPARATUS WITH DRUM FOR SEPARATING PACKAGINGS AND MATERIAL ADHERING THERETO, WITH IMPROVED ENVIRONMENTAL IMPACT

(30) Priorité: 21.09.2020 FR 2009567
(43) Date de publication de la demande: 26.07.2023
(73) Titulaire: GREEN CREATIVE, 94370 Sucy en Brie (FR)
(72) Inventeur: GOMEZ, Rémi, 75015 PARIS (FR)
(74) Mandataire: Cabinet Boettcher
(86) Numéro de dépôt international: PCT/EP2021/075948
(87) Numéro de publication internationale: WO 2022/058616

(56) Documents cités:
- CN-A- 111 589 686
- FR-A1- 3 070 882

## Description

L'invention concerne le tri des déchets en vue notamment de leur recyclage ou de leur élimination. L'invention se rapporte plus particulièrement à un dispositif de nettoyage d'emballages dans le cadre du retraitement de déchets issus notamment de la grande distribution.

### ARRIERE PLAN DE L'INVENTION

Dans le domaine du traitement des déchets issus notamment de la grande distribution, il est connu un appareil de traitement pour collecter de la matière adhérant à la surface d'emballages à traiter. Un tel appareil comporte un tambour cylindrique rotatif autour d'un axe longitudinal pourvu d'orifices formant crible pour retenir les emballages et laisser passer la matière à collecter. Des moyens motorisés entraînent en rotation le tambour cylindrique et un carter externe collecte la matière issue des emballages introduits dans le tambour cylindrique et qui a traversé la paroi de ce tambour cylindrique. La longueur du tambour est généralement prévue de manière à ce qu'un emballage introduit en une première extrémité d'entrée du tambour ressorte par la deuxième extrémité du tambour complètement nettoyé, c'est-à-dire après avoir subi un nombre de cycles de nettoyage (nombre de rotation au sein du tambour) suffisant pour le débarrasser de ses souillures. Ainsi, tous les emballages, quel que soit leur niveau de souillure, subissent un même nombre de cycles de nettoyage. Ceci diminue la capacité de traitement (volume horaire d'emballages traité) de l'appareil de traitement et représente un surcout en énergie consommé pour un volume d'emballages donné. Enfin, les opérations de nettoyage d'un tambour de grande longueur consomment beaucoup d'eau.

FR3070882A1 divulgue un appareil selon le préambule de la revendication 1. CN111589686A divulgue un dispositif de soufflage de gaz en combinaison avec un dispositif d'injection d'eau pour séparer les matériaux et les sécher ensuite.

Il a été envisagé d'implanter une brosse rotative, également entraînée en rotation, dans le tambour cylindrique pour brosser la surface interne du tambour et des emballages afin de réduire le temps de traitement des emballages.

Cependant, une telle solution ne permet pas une amélioration suffisante de la consommation énergétique et du bilan écologique de l'appareil de traitement (prise en compte des consommations en ressources énergétiques et naturelle, notamment l'eau).

### OBJET DE L'INVENTION

L'invention a notamment pour but d'améliorer le bilan écologique d'un appareil de traitement pour collecter de la matière adhérant une surface d'emballage.

### RESUME DE L'INVENTION

A cet effet, on prévoit, un appareil de traitement pour collecter de la matière adhérant à une surface d'emballages à traiter comme déchets, l'appareil de traitement comportant un tambour cylindrique rotatif autour d'un premier axe longitudinal et pourvu d'orifices pour former un crible retenant les emballages et laissant passer la matière à collecter. L'appareil de traitement comprend un moteur pour entraîner en rotation le tambour cylindrique et une première brosse de brossage d'une surface interne du tambour cylindrique. Selon l'invention l'appareil comprend un dispositif de soufflage à l'intérieur du tambour pour souffler un flux de gaz dans une direction comprenant une composante parallèle au premier axe longitudinal.

Le dispositif de soufflage accélère l'évacuation des emballages légers, c'est-à-dire réputés propres, hors du cycle de brossage/centrifugation des emballages et améliore ainsi les temps de cycle de la machine. On obtient ainsi un appareil de traitement pour collecter de la matière adhérant une surface d'emballage qui évacue rapidement les emballages propres sans qu'ils aient à subir des nouveaux cycles de brossage/centrifugation inutiles. Ainsi, le temps et la quantité d'énergie à consacrer au nettoyage d'un volume donné d'emballages à traiter est réduit.

On réduit les délais de traitement des déchets lorsque l'appareil comprend un premier rouleau de laminage des emballages voire un deuxième rouleau de laminage et/ou une deuxième brosse.

On obtient une zone de soufflage homogène et conséquente lorsque le dispositif de soufflage comprend six buses de soufflage.

L'effet du soufflage intervient de manière synergique avec celui de la première brosse lorsque le dispositif de soufflage est disposé pour souffler le flux de gaz dans le premier ou le deuxième quadrant du tambour.

On réduit encore les délais de traitement des déchets lorsque l'appareil comprend un dispositif d'injection d'un jet de liquide.

Avantageusement le dispositif d'injection est agencé pour injecter le jet de liquide au moins sur la deuxième brosse. On améliore encore les temps de cycle de la machinemaintenance comprise- lorsque le premier rouleau de laminage est monté mobile par rapport au châssis pour adopter une première position de travail dans laquelle le premier rouleau de laminage n'est pas en contact avec la deuxième brosse et une deuxième position de maintenance dans laquelle le premier rouleau de laminage vient en contact de la deuxième brosse. Cette amélioration est encore plus sensible lorsque le deuxième rouleau de laminage est monté mobile par rapport au châssis pour adopter une première position de travail dans laquelle le deuxième rouleau de laminage n'est pas en contact avec la deuxième brosse et une deuxième position de maintenance dans laquelle le deuxième rouleau de laminage vient en contact de la deuxième brosse.

Avantageusement, la deuxième brosse s'étend sensiblement selon le premier axe longitudinal.

On améliore encore l'entrainement des déchets vers la fin du processus sans devoir recourir à des moyens d'extraction mécanique des déchets traités hors du tambour ou incliner le tambour lorsque la première brosse comprenant une première extrémité proximale et une deuxième extrémité distale, la première brosse s'étend selon une première direction qui réalise un angle non nul avec un plan comprenant le premier axe longitudinal et la deuxième extrémité distale ou la deuxième extrémité proximale.

Les temps de cycle sont encore améliorés lorsque la première brosse est agencée pour orienter les emballages vers le premier rouleau de laminage.

D'autres caractéristiques et avantages de l'invention ressortiront à la lecture de la description qui suit d'un mode de réalisation particulier/ d'une mise en œuvre particulière et non limitatif/limitative de l'invention.

### BREVE DESCRIPTION DES DESSINS

Il sera fait référence aux dessins annexés, parmi lesquels :
- la figure 1 est une première vue en perspective d'un appareil de traitement selon l'invention ;
- la figure 2 est une deuxième vue en perspective de l'appareil de traitement de la figure 1 ;
- la figure 3 est une vue de face de l'appareil de traitement de la figure 1.

### DESCRIPTION DETAILLEE DE L'INVENTION

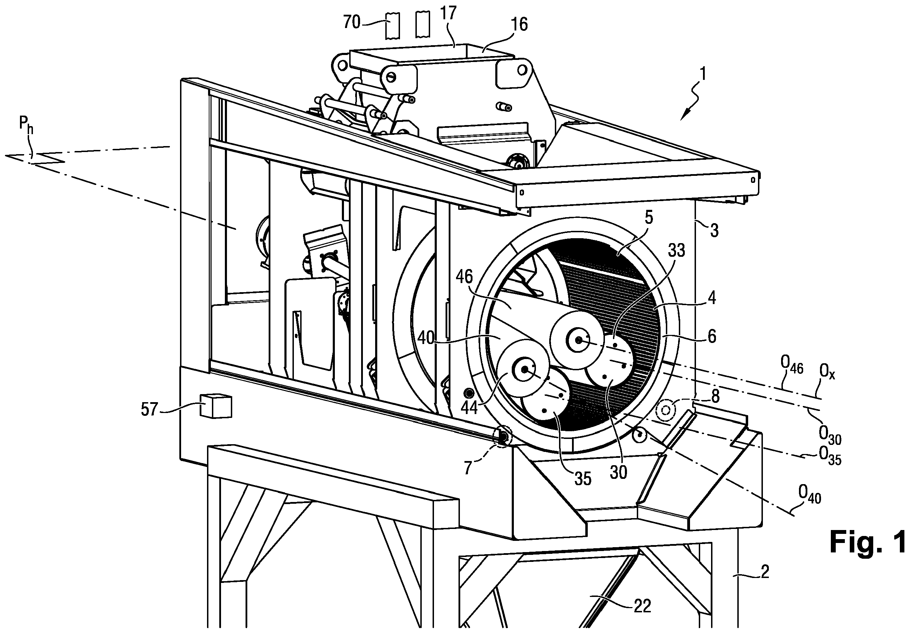

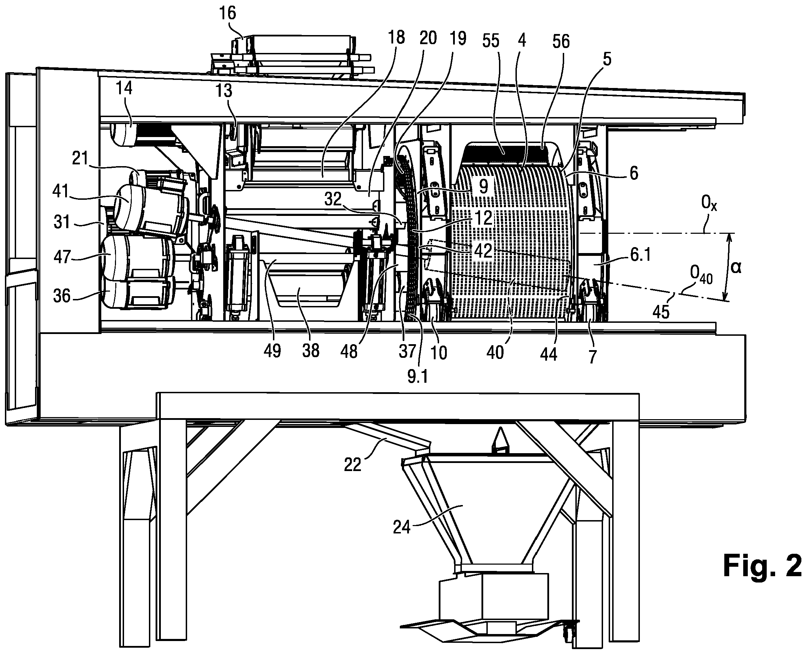

En référence aux figures 1 à 3, l'appareil de traitement selon l'invention, repéré 1, comporte un châssis 2 sous forme d'une structure formée par des profilés en acier mécano soudés, portant un carter 3 en acier.

Le carter 3 renferme un tambour 4 cylindrique ou trommel sous forme d'un cylindre de tôle ajouré par une série d'orifices 5 sur la grande majorité de sa surface pour constituer un crible rotatif autour d'un premier axe longitudinal Ox. La première extrémité 6 du tambour 4 est ouverte et supportée en sa première périphérie 6.1 par un premier galet 7 et un deuxième galet 8. La deuxième extrémité 9 du tambour 4 est supportée en sa deuxième périphérie 9.1 par un troisième galet 10 et un quatrième galet non représenté. Une couronne dentée 12 est solidaire de la deuxième périphérie 9.1 du tambour 4 et est engagée avec un pignon solidaire d'un premier arbre de sortie 13 d'un premier motoréducteur 14. Une tôle 15 ferme la deuxième extrémité 9 du tambour 4.

Une première trémie 16 d'alimentation sensiblement en forme de pyramide renversée comprend une ouverture de chargement 17 supérieure et une ouverture inférieure qui débouche dans un conduit 18 d'alimentation du tambour 4. Le conduit 18 d'alimentation possède une extrémité qui réalise un port d'alimentation 19 qui débouche dans le tambour 4. Une vis sans fin 20 motorisée par un deuxième motoréducteur 21 s'étend dans la conduite 23 d'alimentation pour diriger des emballages placés dans la première trémie 16 et amenés par cette dernière dans le conduit 18 vers le port d'alimentation 19 et alimenter ainsi le tambour 4 en emballages.

Une deuxième trémie 22 de récupération de la matière adhérant à la surface des emballages est placée sous le tambour 4 t dirige la matière collectée vers un conteneur. Plusieurs outils sont montés à l'intérieur du tambour 4. Ici, le tambour 4 renferme un premier rouleau 30 de laminage, un deuxième rouleau de laminage 35, une première brosse 40 de distribution et une deuxième brosse 46 centrale. Tous ces outils sont montés en porte à faux, c'est-à-dire que seules une de leurs extrémités respectives est suspendue.

Le premier rouleau 30 de laminage est monté libre en rotation autour d'un deuxième axe O30 sensiblement parallèle au premier axe longitudinal Ox. Le premier rouleau 30 a la forme générale d'un cylindre et est monté à l'intérieur du tambour 4 pour rouler sur la surface intérieure du tambour. Le premier rouleau 30 a une première surface 31 externe lisse agencée de sorte à forcer le passage des matières à collecter à travers le tambour 4. Le premier rouleau 30 se situe dans le quatrième quadrant du tambour 4 lorsque celui-ci est observé depuis sa première extrémité 6. Le premier palier 32 sur lequel est monté le premier rouleau 30 de laminage est monté à l'extrémité d'un premier vérin de manière à pouvoir être déplacé selon une première direction radiale. Un premier capteur 33 inductif est monté sur la première extrémité 34 proximale du premier rouleau 30 et mesure la rotation du premier rouleau 30.

Le deuxième rouleau 35 de laminage est monté libre en rotation autour d'un troisième axe 035 sensiblement parallèle au premier axe longitudinal Ox. Le deuxième rouleau 35 est identique au premier rouleau 30 et se situe dans le troisième quadrant du tambour 4 lorsque celui-ci est observé depuis sa première extrémité 6. Le deuxième palier 36 sur lequel est monté le deuxième rouleau 35 de laminage est monté à l'extrémité d'un deuxième vérin de manière à pouvoir être déplacé selon une deuxième direction radiale. Un deuxième capteur 37 inductif est monté sur la première extrémité 38 proximale du deuxième rouleau 35 et mesure la rotation du deuxième rouleau 35.

La première brosse 40 de distribution est entraînée en rotation autour d'un quatrième axe O40 par un troisième motoréducteur 41 relié en la première extrémité proximale 42 de la première brosse 40 par un quatrième arbre 43. La deuxième extrémité distale 44 de la première brosse est, ici, située en dessous de la première extrémité proximale 42 de manière à faire « plonger » la première brosse 40 vers l'avant. Dans cette configuration, la première brosse 40 s'étend selon une première direction 45, parallèle ici au quatrième axe O40, qui réalise un angle α non nul avec un premier plan Ph comprenant le premier axe longitudinal Ox et la première extrémité proximale 42. En d'autres termes, la première direction 45 et le premier axe longitudinal Ox ne sont pas coplanaires. La première brosse 40 a la forme générale d'un cylindre et est montée à l'intérieur du tambour 4 pour brosser la surface interne du tambour 4. La vitesse de rotation de la première brosse 40 est, préférentiellement, très supérieure à celle du tambour 4. La première brosse 40 se situe dans le troisième quadrant du tambour 4 lorsque celui-ci est observé depuis sa première extrémité 6.

La deuxième brosse 46 est entraînée en rotation autour d'un cinquième axe O46 sensiblement confondu avec le premier axe longitudinal Ox par un quatrième motoréducteur 47 relié en la première extrémité proximale 48 de la deuxième brosse 46 par un cinquième arbre 49 pourvu de cardans. La deuxième brosse 46 a la forme générale d'un cylindre.

Le tambour 4 renferme également un dispositif de soufflage 50 d'un flux d'air 51 ainsi qu'un dispositif d'injection 60 d'un jet d'eau 61 à l'intérieur du tambour 4.

Le dispositif de soufflage 50 comprend six buses 50.1 à 50.6 de soufflage positionnées en ligne, ici selon une direction verticale, et implantées à proximité du port d'alimentation 19. Le dispositif de soufflage 50 est situé à proximité de la deuxième périphérie 9.2 et les buses 50.1 à 50.6 soufflent chacune un flux d'air dans une direction sensiblement parallèle au premier axe longitudinal Ox. Ainsi, le dispositif de soufflage 50 est disposé pour souffler le flux d'air 51 issus des six buses 50.1 à 50.6 dans une première portion P1 du tambour 4 délimitée par un qui correspond au deuxième quadrant du tambour 4 lorsque celui-ci est observé depuis sa première extrémité 6. La portion P1 correspond au premier quadrant du tambour 4 lorsque celui-ci est observé depuis sa deuxième extrémité 9.

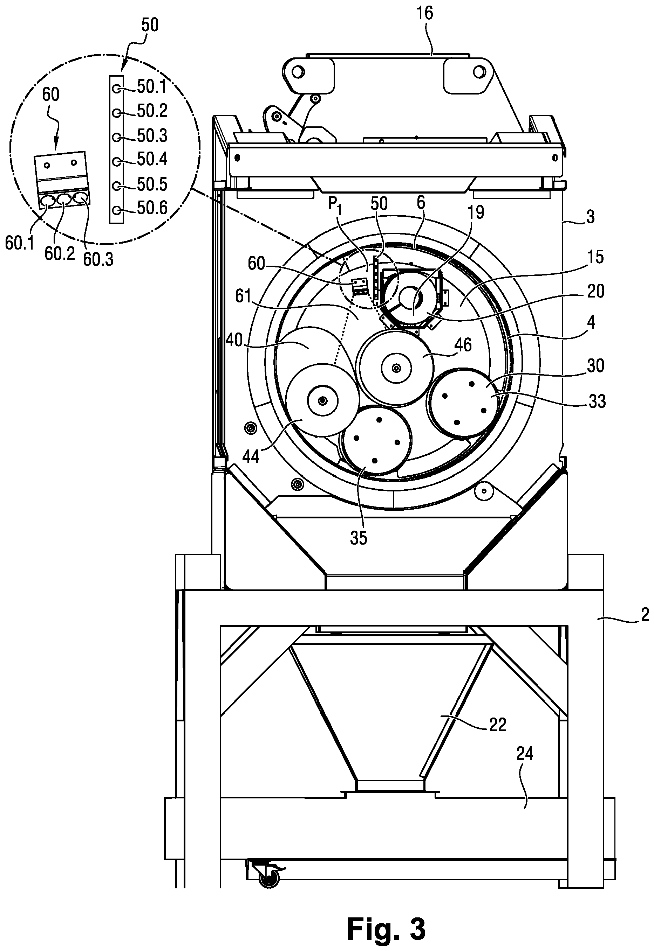

Comme visible en figure 3, Le dispositif d'injection 60 est implanté à proximité du dispositif de soufflage 50 et comprend ici trois buses 60.1 à 60.3 de pulvérisation agencées pour former un jet d'eau 61 qui est projeté sur la deuxième brosse 46 et la première brosse 40. L'appareil de traitement 1 comprend également des moyens de dégoujonnage des orifices 5 lors de la rotation du tambour 4, ici sous la forme d'une roue 55 montée à rotation selon un axe s'étendant sensiblement parallèlement au premier axe longitudinal Ox et qui comprend autant de disques dentés 56 que le tambour comprend de rangées d'orifices 5.

Le premier motoréducteur 14, le deuxième motoréducteur 21, , , le troisième motoréducteur 41, le quatrième motoréducteur 47, les commande du dispositif de soufflage 50 et du dispositif injection 60, le premier capteur 33, le deuxième capteur 37 ainsi que d'autres équipements électriques (surveillance de fonctionnement, sécurités, etc...) sont reliés à une unité de commande 57 de l'appareil de traitement 1.

En fonctionnement, un utilisateur charge la première trémie 16 en emballages 70 par l'ouverture de chargement 17. Une fois la première trémie 16 chargée, l'unité de commande 57 commande la mise en rotation du tambour 4, de la première brosse 40 et de la deuxième brosse 46. Le premier rouleau 30 et le deuxième rouleau 35 sont entraînés en rotation par la rotation du trommel 4 via la pression de contact exercée et ajustée par le premier vérin sur le premier palier 32 et par le deuxième vérin sur le deuxième palier 36. L'unité de commande 57 déclenche également le dispositif de soufflage 50 et le dispositif d'injection 60. L'unité de commande 57 commande ensuite la mise en route de la vis sans fin 20 jusqu'à ce qu'une quantité déterminée d'emballages 70 -pouvant être mesurée à l'aide de capteurs de poids situées sur la première trémie 16 ou au niveau des galets 7 et 8- soit introduite dans le tambour 4. Le sens de rotation du tambour est, ici un sens horaire selon la représentation des figures 1 et 3.

Les emballages 70 sont happés par le premier rouleau 30 pour être laminés entre la surface externe 33 du premier rouleau 30 et la surface interne du tambour 4. Les emballages 70 subissent alors un deuxième laminage en passant entre la surface externe du deuxième rouleau 35 et la surface interne du tambour 4. Les emballages ainsi laminés sont ensuite acheminés par la rotation du tambour 4 vers la première brosse 40 pour être brossés et emmenés dans la zone de contact de la première brosse 40 avec la surface interne du tambour 4, zone dans laquelle l'emballage est soumis à un brossage intense. Ceci a pour effet de retirer les matières adhérant à la surface des emballages 70. Une fois que ces derniers ont quitté la zone de contact, ils sont éjectés par la première brosse 40 vers le deuxième quadrant du tambour 4, pour suivre une trajectoire sensiblement circulaire, au cours de laquelle il saute au-dessus de la première brosse 40 et frapper le tambour 4 avant d'être à nouveau happé par le premier rouleau 30 et subir un même cycle de traitement que celui précédemment décrit. A chaque saut hors de la zone de contact, les emballages 70 perdent une portion supplémentaire des matières qui adhèrent à leurs surfaces, celles-ci étant centrifugées lors de l'éjection des emballages 70. Lors du passage des emballages 70 devant les buses 50.1 à 50.6 du dispositif de soufflage 50, les emballages les plus légers- c'est-à-dire sur lesquels il ne reste peu ou plus de matière adhérant à leurs surfacessont soufflés hors du tambour 4 par la première extrémité 6. Les emballages 70 qui ne sont pas suffisamment propres pour être éjectés retombent soit sur la deuxième brosse 46 qui les dirige alors vers le premier rouleau de laminage 30 en sus de les brosser, soit directement sur le premier rouleau de laminage 30. La pression du flux d'air 51 permet ainsi d'ajuster le niveau de salissure final des emballages 70 soufflés hors du tambour 4.

L'inclinaison de la première brosse 40 vers l'avant procure une composante longitudinale aux emballages 70 lors de leur éjection de la première brosse 40. Les emballages 70 sont alors entraînés vers la première extrémité 6 du tambour 4 sans qu'il soit nécessaire de procéder à un vidage du tambour 4 à l'aide d'outils ou d'incliner le tambour 4 pour créer un flux continu d'acheminement des déchets vers la première extrémité 6 du tambour 4.

L'injection d'eau au sein du tambour 4 à l'aide des buses 60.1 à 60.3, en mouillant les emballages 70 accélère la collecte des matières adhérant sur les emballages 70. L'injection par pulvérisation ajouté à la fonction de dispersion de la deuxième brosse 46 permet d'obtenir un mouillage rapide et homogène des emballages 70 et de l'ensemble du tambour 4.

La rotation du tambour 4 provoque la rotation de la roue 55 et les dents des disques 56 évacuent les bouchons de matières obstruant les orifices 5 qui tombe dans le tambour 4 où la première brosse 40, le premier rouleau 30, le deuxième rouleau 35 les désagrègent et les évacuent au travers des orifices 5.

Les dimensions des orifices 5 du tambour 4 sont choisies pour retenir les emballages 70, tout en laissant passer les matières qu'ils contiennent et qui adhèrent à ces emballages 70. Le passage des matières en question est encore facilité par l'effet centrifuge de la rotation du tambour 4, de sorte que ces matières se retrouvent ensuite dans le châssis 2, les emballages 70 étant quant à eux retenus à l'intérieur du tambour 4 jusqu'à leur évacuation par la première extrémité 6. Les matières détachées des emballages sont collectées à l'aide racleurs et dirigées vers la deuxième trémie 22 pour être reçues par le conteneur 24.

On obtient ainsi un appareil de traitement pour collecter de la matière adhérant une surface d'emballage qui consomme peu d'eau et évacue rapidement les emballages qui sont propres sans qu'ils aient à subir des nouveaux cycles de laminage/brossage inutiles. Ainsi, le temps et la quantité d'énergie et d'eau à consacrer au nettoyage d'un volume donné d'emballages à traiter est réduit.

L'unité de commande 57 analyse les informations en provenance du premier capteur 33 et du deuxième capteur 37 et détermine un premier écart δ30-4 entre la première vitesse de rotation V30 du premier rouleau 30 et la vitesse de rotation du trommel 4. L'unité de commande 57 détermine également un deuxième écart δ35-4 entre la deuxième vitesse de rotation V35 du deuxième rouleau 35 et la vitesse de rotation du trommel 4. En utilisant le ratio fixe qui existe entre le rayon intérieur du trommel 4 et le rayon extérieur du premier rouleau 30 et du deuxième rouleau 35, l'unité 57 détermine un premier patinage entre le premier rouleau 30 et le trommel 4 ainsi qu'un deuxième patinage entre le deuxième rouleau 35 et le trommel 4. Lorsque le premier patinage et/ou le deuxième patinage dépasse un seuil prédéfini, l'unité de commande déclenche une alerte recommandant de procéder à une opération de nettoyage du premier rouleau 30 et/ou du deuxième rouleau 35. Alternativement, l'opération de nettoyage peut être déclenchée automatiquement par l'unité de commande 57.

Lors d'une opération de nettoyage de l'appareil de traitement 1, l'unité de commande 57 commande le premier vérin et le deuxième vérin de manière à ce que le premier rouleau 30 et le deuxième rouleau 35 effectuent un déplacement selon une direction radiale et viennent au contact de la deuxième brosse 46. L'unité de commande 57 commande alors la mise en rotation de la deuxième brosse 46, du premier rouleau 30 du deuxième rouleau 35 et déclenche le dispositif d'injection 60 d'eau. La deuxième brosse nettoie alors les rouleaux quand la première brosse 40 nettoie la surface interne du tambour 4.

Le premier et le deuxième vérin peuvent également être utilisés pour ajuster la distance séparant le premier rouleau de laminage 30 et le deuxième rouleau de laminage 35 de la surface interne du tambour 4 afin de l'adapter au type d'emballage 70 à traiter.

Bien entendu, l'invention n'est pas limitée au mode de réalisation décrit mais englobe toute variante entrant dans le champ de l'invention telle que définie par les revendications.

En particulier,
-bien qu'ici la compression des déchets est assurée par un rouleau cylindrique monté à rotation, l'invention s'applique également à d'autres moyens de compression comme par exemple un rouleau cylindrique fixe, un racloir plan fixe positionné pour former un aigle aigu avec la surface interne du tambour, ou une tôle fixe ayant une section transversale sensiblement en forme de virgule. Un tel racloir ou une telle tôle pourra présenter une portion pourvue de griffes (première fonction de déconditionnement) et une deuxième portion de guidage (laminage). Plus généralement, les moyens de compression créent un guidage des déchets dans un espace allant en se réduisant au fur et à mesure que le déchet approche de la surface interne du tambour. Les moyens de compression de l'invention peuvent également comprendre un cône de compression, dont l'axe de rotation serait parallèle ou non à l'axe de rotation du tambour, un cylindre de courbe directrice octogonale ou quelconque.

Bien qu'ici les moyens de dégoujonnage comprennent une roue à dents, l'invention s'applique également à d'autres moyens de dégoujonnage du tambour lors de sa rotation comme par exemple une injection haute pression d'eau, d'air ou des masselottes qui viennent percuter le tambour ;
- bien qu'ici le deuxième rouleau de laminage soit pourvu de son propre moteur, l'invention s'applique également à un deuxième rouleau entraîné par le même moteur que le premier rouleau à l'aide par exemple d'un accouplement par courroie ou chaîne ;
- bien qu'ici l'appareil de traitement comprenne deux rouleaux de laminage identique, l'invention s'applique également à un appareil ne disposant que d'un seul rouleau, ou de plusieurs rouleaux pouvant être différents ;
- bien qu'ici l'appareil de traitement comprenne un dispositif de soufflage d'air l'invention s'applique également à d'autres types de dispositifs de soufflage d'un flux gazeux comme par exemple le soufflage d'azote ou tout autre gaz ou mélange de gaz ;
- bien qu'ici l'appareil de traitement comprenne un dispositif de pulvérisation d'eau, l'invention s'applique également à d'autres type de dispositif d'injection comme par exemple un écoulement à basse pression ou à pression nulle, un jet plutôt qu'une pulvérisation, une pluie. Le liquide injecté peut être à base d'eau ou à base d'autre produit et contenir des additifs du type dégraissant, bactéricide, nettoyant ou solvant,
- bien qu'ici l'appareil ait été décrit avec deux brosses, deux rouleaux de laminage, un dispositif d'injection d'eau et un dispositif de soufflage d'air, l'invention s'applique également à d'autres configurations de l'appareil qui pourra, selon le diamètre souhaité de son tambour ou d'autres sujétions relatives au type d'emballages traités ne comporter qu'une unique brosse et un dispositif de soufflage, ou plus de deux brosses et/ou un unique rouleau ou plus de deux ;
- bien qu'ici la direction du flux de gaz soit sensiblement parallèle à l'axe longitudinal, l'invention s'applique également à tout flux de gaz comprenant une composante sensiblement parallèle à l'axe longitudinal qui dirige les emballages légers en fin de cycle (i.e. : vers l'extrémité ouverte du tambour) ;
- bien qu'ici le tambour comprenne une extrémité ouverte et que les emballages ayant subi un cycle complet de traitement (c'est-à-dire un ou plusieurs cycles de brossage selon leur degré de salissure), l'invention s'applique également à un tambour fermé dans lequel les emballages traités s'accumulent en une extrémité ;
- bien qu'ici le dispositif de soufflage soit positionné dans une portion qui correspond au deuxième quadrant du tambour lorsque celui-ci est observé depuis sa première extrémité 6, l'invention s'applique également à d'autres implantations du dispositif de soufflage dans le tambour, et préférentiellement une implantation dans une portion correspond au premier quadrant du tambour lorsque celui-ci est observé depuis sa première extrémité ;
- bien qu'ici l'implantation relative de la première brosse et du premier rouleau de laminage permette à la première brosse d'orienter les emballages vers le premier rouleau de laminage, l'invention s'applique également à d'autres moyens d'orienter les emballages en sortie de la première brosse vers le premier rouleau de laminage comme par exemple en ajustant le diamètre et/ou la vitesse de rotation de la première de manière à orienter les emballages vers le premier rouleau de laminage ;
- bien qu'ici des capteurs inductifs soient installés sur les rouleaux de laminage, l'invention s'applique également à d'autres types de capteurs de rotation comme par exemple un codeur optique, un capteur par point, un alternateur.

## Revendications

1. Appareil de traitement (1) pour collecter de la matière adhérant à une surface d'emballages (70) à traiter comme déchets, l'appareil de traitement (1) comportant un tambour cylindrique (4) rotatif autour d'un premier axe longitudinal (Ox) et pourvu d'orifices (5) pour former un crible retenant les emballages (70) et laissant passer la matière à collecter ;
un moteur (14) pour entraîner en rotation le tambour cylindrique (4) ;
une première brosse (40) de brossage d'une surface interne du tambour cylindrique (4) ;
**caractérisé en ce que**
l'appareil (1) comprend un dispositif de soufflage (50) à l'intérieur du tambour (4) pour souffler un flux de gaz (51) dans une direction comprenant une composante parallèle au premier axe longitudinal (Ox).

2. Appareil de traitement (1) selon la revendication 1, comprenant un premier rouleau (30) de laminage des emballages (70).

3. Appareil de traitement (1) selon la revendication 2, dans lequel la première brosse (40) est agencée pour orienter les emballages (70) vers le premier rouleau (30) de laminage.

4. Appareil de traitement (1) selon l'une quelconque des revendications 1 à 3, dans lequel le dispositif de soufflage (50) comprend six buses de soufflage (50.1-50.6).

5. Appareil de traitement (1) selon l'une quelconque des revendications précédentes, dans lequel le dispositif de soufflage (50) est disposé pour souffler le flux de gaz (51) dans le premier quadrant ou le deuxième quadrant du tambour (4).

6. Appareil de traitement (1) selon l'une quelconque des revendications précédentes, comprenant une deuxième brosse (46) .

7. Appareil de traitement (1) selon l'une quelconque des revendications précédentes, comprenant un dispositif d'injection (60) d'un jet de liquide (61).

8. Appareil de traitement (1) selon les revendications 6 et 7, dans lequel le dispositif d'injection (60) est agencé pour injecter le jet de liquide (61) au moins sur la deuxième brosse (46).

9. Appareil de traitement (1) selon les revendications 2 et 6, dans lequel le premier rouleau (30) de laminage est monté mobile par rapport au châssis (2) pour adopter une première position de travail dans laquelle le premier rouleau (30) de laminage n'est pas en contact avec la deuxième brosse (46) et une deuxième position de maintenance dans laquelle le premier rouleau (30) de laminage vient en contact de la deuxième brosse (46).

10. Appareil de traitement (1) selon l'une quelconque des revendications 6 à 9, dans lequel la deuxième brosse (46) s'étend sensiblement selon le premier axe longitudinal (Ox) .

11. Appareil de traitement (1) selon la revendication 2, comprenant un deuxième rouleau (35) de laminage.

12. Appareil de traitement (1) selon les revendication 6 et 11, dans lequel le deuxième rouleau (35) de laminage est monté mobile par rapport au châssis (2) pour adopter une première position de travail dans laquelle le deuxième rouleau (35) de laminage n'est pas en contact avec la deuxième brosse (46) et une deuxième position de maintenance dans laquelle le deuxième rouleau (35) de laminage vient en contact de la deuxième brosse (46).

13. Appareil de traitement (1) selon l'une quelconque des revendications précédentes, dans lequel la première brosse (40) comprenant une première extrémité proximale (48) et une deuxième extrémité distale (44), la première brosse (40) s'étend selon une première direction qui réalise un angle non nul avec un plan (Ph) comprenant le premier axe longitudinal (Ox) et la deuxième extrémité distale (44) ou la première extrémité proximale (48).

## Patentansprüche

1. Verarbeitungsvorrichtung (1) zum Sammeln von Material, das an einer Oberfläche von als Abfall zu behandelnden Verpackungen (70) anhaftet, wobei die Verarbeitungsvorrichtung (1) umfasst: eine zylindrische Trommel (4), die um eine erste Längsachse (Ox) drehbar ist und mit Öffnungen (5) versehen ist, um ein Sieb zu bilden, das die Verpackungen (70) zurückhält und das zu sammelnde Material durchlässt;
einen Motor (14), der die zylindrische Trommel (4) in Drehung versetzt;
eine erste Bürste (40) zum Bürsten einer Innenfläche der zylindrischen Trommel (4);
**dadurch gekennzeichnet, dass**
die Vorrichtung (1) eine Gebläseeinrichtung (50) innerhalb der Trommel (4) umfasst, um einen Gasstrom (51) in eine Richtung zu blasen, die eine Komponente parallel zu der ersten Längsachse (Ox) umfasst.

2. Verarbeitungsvorrichtung (1) nach Anspruch 1, welche eine erste Walzrolle (30) zum Auswalzen der Verpackungen (70) umfasst.

3. Verarbeitungsvorrichtung (1) nach Anspruch 2, wobei die erste Bürste (40) derart angeordnet ist, dass sie die Verpackungen (70) zu der ersten Walzrolle (30) hin ausrichtet.

4. Verarbeitungsvorrichtung (1) nach einem der Ansprüche 1 bis 3, wobei die Gebläseeinrichtung (50) sechs Gebläsedüsen (50.1-50.6) umfasst.

5. Verarbeitungsvorrichtung (1) nach einem der vorhergehenden Ansprüche, wobei die Gebläseeinrichtung (50) derart angeordnet ist, dass sie den Gasstrom (51) in den ersten Quadranten oder in den zweiten Quadranten der Trommel (4) hineinbläst.

6. Verarbeitungsvorrichtung (1) nach einem der vorhergehenden Ansprüche, welche eine zweite Bürste (46) umfasst.

7. Verarbeitungsvorrichtung (1) nach einem der vorhergehenden Ansprüche, welche eine Einspritzvorrichtung (60) zum Einspritzen eines Flüssigkeitsstrahls (61) umfasst.

8. Verarbeitungsvorrichtung (1) nach den Ansprüchen 6 und 7, wobei die Einspritzvorrichtung (60) derart angeordnet ist, dass sie den Flüssigkeitsstrahl (61) zumindest auf die zweite Bürste (46) aufspritzt.

9. Verarbeitungsvorrichtung (1) nach den Ansprüchen 2 und 6, wobei die erste Walzrolle (30) in Bezug auf den Rahmen (2) beweglich montiert ist, sodass sie eine erste Position oder Arbeitsposition einnehmen kann, in welcher die erste Walzrolle (30) nicht in Kontakt mit der zweiten Bürste (46) steht, bzw. eine zweite Position oder Wartungsposition einnehmen kann, in welcher die erste Walzrolle (30) in Kontakt mit der zweiten Bürste (46) tritt.

10. Verarbeitungsvorrichtung (1) nach einem der Ansprüche 6 bis 9, wobei sich die zweite Bürste (46) im Wesentlichen entlang der ersten Längsachse (Ox) erstreckt.

11. Verarbeitungsvorrichtung (1) nach Anspruch 2, welche eine zweite Walzrolle (35) umfasst.

12. Verarbeitungsvorrichtung (1) nach den Ansprüchen 6 und 11, wobei die zweite Walzrolle (35) in Bezug auf den Rahmen (2) beweglich montiert ist, sodass sie eine erste Position oder Arbeitsposition einnehmen kann, in welcher die zweite Walzrolle (35) nicht in Kontakt mit der zweiten Bürste (46) steht, bzw. eine zweite Position oder Wartungsposition einnehmen kann, in welcher die zweite Walzrolle (35) in Kontakt mit der zweiten Bürste (46) tritt.

13. Verarbeitungsvorrichtung (1) nach einem der vorhergehenden Ansprüche, wobei die erste Bürste (40) ein erstes, proximales Ende (48) und ein zweites, distales Ende (44) umfasst, wobei sich die erste Bürste (40) in eine erste Richtung erstreckt, die einen Winkel ungleich Null mit einer Ebene (Ph) bildet, welche die erste Längsachse (Ox) und das zweite, distale Ende (44) oder das erste, proximale Ende (48) einschließt.

## Claims

1. Processor apparatus (1) for collecting material adhering to surfaces of packages (70) for processing as waste, the processor apparatus (1) comprising a cylindrical drum (4) that is rotatable about a longitudinal first axis (Ox) and that is provided with orifices (5) for forming a screen that retains the packages (70) and that allows the material for collecting to pass through;
· a motor (14) for driving the cylindrical drum (4) in rotation; and
· a first brush (40) for brushing an inside surface of the cylindrical drum (4);
the apparatus (1) being **characterized in that** it includes a blower device (50) inside the drum (4) for blowing a gas stream (51) in a direction having a component parallel to the longitudinal first axis (Ox).

2. Processor apparatus (1) according to claim 1, including a first rolling roller (30) for rolling the packages (70).

3. Processor apparatus (1) according to claim 2, wherein the first brush (40) is arranged to direct the packages (70) towards the first rolling roller (30).

4. Processor apparatus (1) according to any one of claims 1 to 3, wherein the blower device (50) has six blower nozzles (50.1-50.6).

5. Processor apparatus (1) according to any preceding claim, wherein the blower device (50) is arranged to blow the gas stream (51) into the first quadrant or the second quadrant of the drum (4).

6. Processor apparatus (1) according to any preceding claim, including a second brush (46).

7. Processor apparatus (1) according to any preceding claim, including an ejector device (60) for injecting a liquid jet (61).

8. Processor apparatus (1) according to claims 6 and 7, wherein the injector device (60) is arranged to inject the liquid jet (61) at least onto the second brush (46).

9. Processor apparatus (1) according to claims 2 and 6, wherein the first rolling roller (30) is mounted to be movable relative to the frame (2) in order to adopt a working first position in which the first rolling roller (30) is not in contact with the second brush (46) and a maintenance second position in which the first rolling roller (30) comes into contact with the second brush (46) .

10. Processor apparatus (1) according to any one of claims 6 to 9, wherein the second brush (46) extends substantially along the longitudinal first axis (Ox).

11. Processor apparatus (1) according to claim 2, including a second rolling roller (35).

12. Processor apparatus (1) according to claims 6 and 11, wherein the second rolling roller (35) is mounted to be movable relative to the frame (2) in order to adopt a working first position in which the second rolling roller (35) is not in contact with the second brush (46) and a maintenance second position in which the second rolling roller (35) comes into contact with the second brush (46) .

13. Processor apparatus (1) according to any preceding claim, wherein the first branch (40) has a proximal first end (48) and a distal second end (44), and the first brush (40) extends in a first direction that forms a nonzero angle with a plane (Ph) containing the longitudinal first axis (Ox) and the distal second end (44) or the proximal first end (48).
